# FASCICULE DE BREVET EUROPEEN

(11) **EP 2 709 866 B1**
(45) Date de publication et mention de la délivrance du brevet: **20.01.2016**
(21) Numéro de dépôt: 12728696.1
(22) Date de dépôt: 15.05.2012
(51) Int. Cl.: B60J 5/06, B62D 25/02

(54) **VEHICULE AUTOMOBILE A PORTIERE COULISSANTE**
KRAFTFAHRZEUG MIT EINER SCHIEBETÜR
MOTOR VEHICLE HAVING A SLIDING DOOR

(30) Priorité: 20.05.2011 FR 1154418
(43) Date de publication de la demande: 26.03.2014
(73) Titulaire: Renault S.A.S., 92100 Boulogne-Billancourt (FR)
(72) Inventeur: LEFEBVRE, Benjamin, F-91470 Les Molieres (FR)
(86) Numéro de dépôt international: PCT/FR2012/051088
(87) Numéro de publication internationale: WO 2012/160296

(56) Documents cités:
- EP-A1- 0 356 373
- EP-A2- 1 745 958
- EP-A2- 1 880 924

## Description

La présente invention concerne le domaine des véhicules automobiles et, notamment les véhicules automobiles comprenant au moins une portière coulissante.

Plus particulièrement, l'invention concerne la structure latérale inférieure d'un véhicule automobile comportant une portière latérale coulissante.

Il est connu de prévoir sur un véhicule automobile, au moins une ouverture de portière latérale délimitée par un marche-pied et deux piliers de porte verticaux, et destinée à coopérer avec une portière coulissante dans au moins un rail de guidage inférieur le long d'une direction longitudinale du véhicule. Le rail de guidage inférieur est généralement situé sur le marche-pied du véhicule et comprend à l'une de ses extrémités, un dispositif de fin de course d'une portière. Un tel véhicule est décrit dans le brevet EP0 356 373 A1.

Les portes coulissantes présentent de nombreux avantages. Ainsi, en position ouverte, elles offrent un dégagement important de l'ouverture de la caisse sans générer un encombrement important à l'extérieur du véhicule.

Toutefois, afin de ne pas endommager la carrosserie, les rails de guidage inférieurs sont généralement équipés d'un dispositif de fin de course situé à une extrémité du rail de guidage. Le dispositif de fin de course permet d'éviter une surcourse de l'ouverture de la portière coulissante pouvant endommager la carrosserie.

Lorsque la portière coulissante arrive en fin de course, la structure extérieure du marche-pied peut être soumise à un déplacement vers l'extérieur du véhicule, déformant ainsi la structure extérieure du marche-pied. Ce phénomène peut être communément appelé « phénomène de levier ».

Une solution consiste à renforcer la structure extérieure de marche-pied en incorporant un renfort entre la structure intérieure et la structure extérieure, au niveau du dispositif de fin de course de la portière coulissante.

Toutefois, il s'avère qu'un tel renfort n'est pas suffisant, et que le phénomène de levier reste présent et déforme alors le renfort fixé à la structure extérieure du marche-pied.

Un objectif de l'invention est donc de pallier ces inconvénients et de fournir un véhicule automobile permettant de réduire le risque de déformation de la structure extérieure de marche-pied, sans modifier de façon significative les structures intérieure et extérieure déjà existantes.

Selon un mode de réalisation, l'invention a pour objet un véhicule automobile selon la revendication 1.

Ainsi, la structure extérieure est renforcée au niveau du dispositif de fin de course sans modifier de manière significative les structures intérieure et extérieure.

Avantageusement, le rail de guidage inférieur, présentant une section transversale en forme de U s'ouvrant vers l'extérieur du véhicule et s'étendant le long d'une direction longitudinale du véhicule, est monté sur la structure extérieure.

De manière préférentielle, le renfoncement local peut être joint au moyen de renfort.

Avantageusement, le dispositif d'arrêt comprend un support d'arrêt, un moyen de fixation et un moyen d'arrêt.

Le moyen de fixation peut comprendre deux ailettes de fixation à la structure extérieure.

Selon un mode de réalisation, les structures intérieure et extérieure, le moyen de renfort et le moyen de fixation sont assemblés ensemble par soudage et/ou vissage.

Par exemple, les moyens de vissage comprennent un écrou soudé sur la surface intérieure du moyen de renfort ou sur la surface intérieure de la structure intérieure.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue en perspective d'une partie d'un véhicule automobile selon l'invention,
- la figure 2 est un détail de la figure 1,
- la figure 3 est une vue en coupe III-III de la figure 2, et
- les figures 4a, 4b et 4c sont des vues en coupe IV-IV de la figure 3, illustrant des modes de réalisation différents.

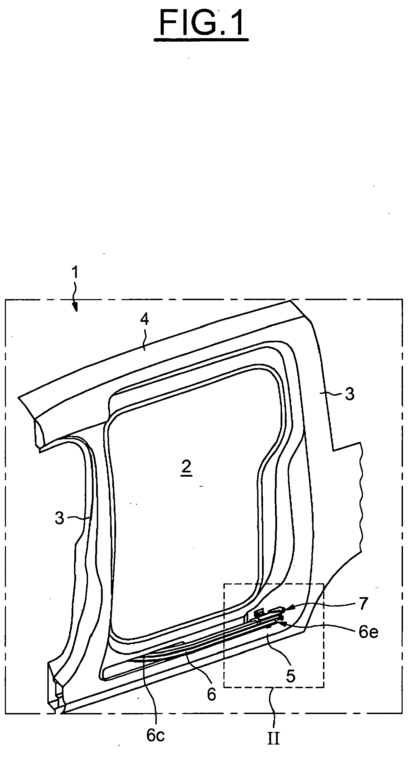

Tel qu'illustré sur la figure 1, une partie d'un côté latéral d'un véhicule automobile, référencée 1 dans son ensemble, comprend une ouverture de portière 2 délimitée latéralement par deux piliers de porte 3 reliés par une traverse supérieure 4 et un marche-pied latéral inférieur 5.

La structure du côté latéral du véhicule 1 est réalisée par une succession de tôles métalliques embouties.

Le marche-pied latéral inférieur 5 est destiné à supporter la charge, ainsi qu'un rail de guidage 6 d'une portière coulissante (non représentée) de manière à faire coulisser la portière dans une direction longitudinale du véhicule automobile 1 entre une position ouverte et une position fermée de fermeture de l'ouverture 2.

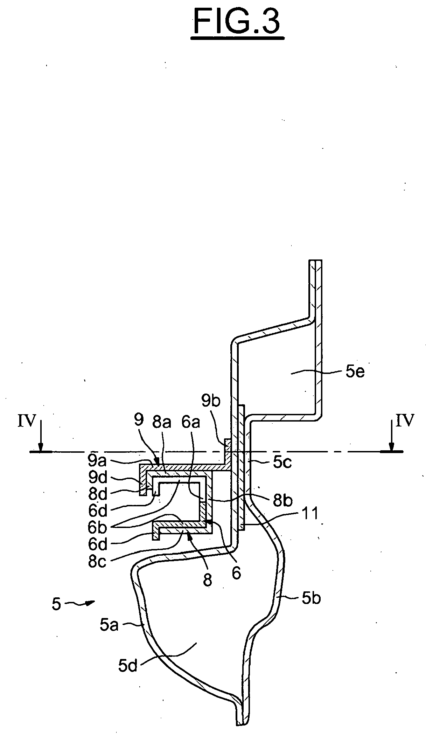

Le rail de guidage 6 présente une section de forme générale de U, s'ouvrant vers l'extérieur du véhicule et visible en détail sur la figure 3. Le rail de guidage 6 comprend une partie centrale verticale 6a et deux parties latérales horizontales 6b s'étendant de part et d'autre de la partie centrale 6a en saillie vers l'extérieur du véhicule, afin de coopérer avec un chariot de guidage (non représenté) monté sur la portière coulissante. Le rail de guidage 6 est monté sur le marchepied latéral inférieur 5 le long d'une direction sensiblement longitudinale du véhicule 1 et comprend une extrémité courbée 6c dirigée vers l'intérieure du véhicule 1 et permettant la fermeture de l'ouverture 2. Tel qu'illustré sur la figure 3, une des parties latérales 6b comprend une aile rabattue 6d vers le bas du véhicule. On pourrait, en variante, prévoir que les deux parties latérales comprennent chacune une aile rabattue vers le bas ou vers le haut du véhicule, ou encore qu'aucune partie latérale ne comprennent d'aile rabattue.

Le rail de guidage 6 comprend en outre, à l'une de ses extrémités 6e, opposée à l'extrémité courbée 6c, un dispositif de fin de course 7 afin d'éviter une éventuelle surcourse de la portière coulissante (non représentée) pouvant endommager la carrosserie du véhicule 1. L'extrémité 6e du rail de guidage 6 est coupée afin d'implanter le dispositif de fin de course 7. Ainsi, l'extrémité 6e du rail 6 comprend qu'une partie latérale inférieure 6b et une portion de la partie centrale verticale 6a.

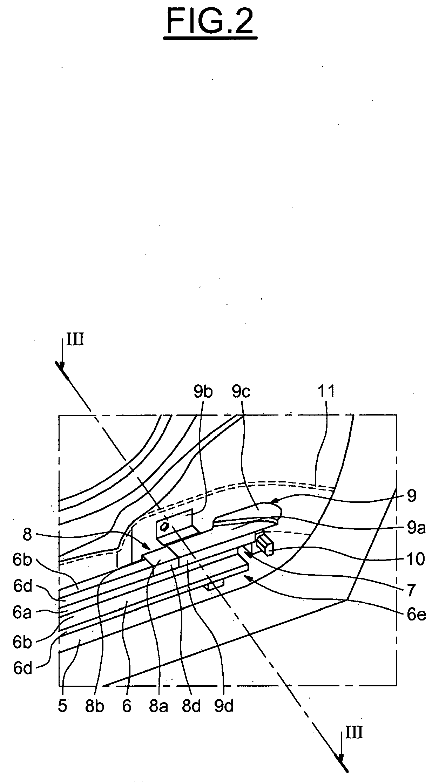

Le dispositif de fin de course 7 est illustré plus en détail sur la figure 2.

Le dispositif de fin de course 7 comprend un support d'arrêt 8 monté sur le rail de guidage inférieur 6, un moyen de fixation 9 monté sur le support d'arrêt 8 et sur le marche-pied latéral inférieur 5 et un moyen d'arrêt 10, tel que, par exemple, une butée.

Le support d'arrêt 8 comprend une première portion horizontale 8a s'étendant transversalement par une seconde portion verticale 8b et par une troisième portion horizontale 8c. Les trois portions 8a, 8b, 8c du support d'arrêt sont fixées sur l'extrémité 6e du rail de guidage et forment ainsi un prolongement du rail de guidage 6 et notamment de la portion principale 6a et des portions latérales 6b. En variante, on pourrait prévoir un support d'arrêt 8 ne comportant pas la troisième portion horizontale 8c. Tel qu'illustré sur la figure 3, le support d'arrêt 8 comprend en outre une aile rabattue 8d formant le prolongement ou entourant l'aile rabattue 6d du rail 6.

Le moyen de fixation 9 présente une section en forme de L et comprend une portion principale horizontale 9a disposée sur la première portion 8a du support d'arrêt 8 et deux ailettes de fixation 9b, 9c au marche-pied latéral inférieur 5. Le moyen de fixation 9 peut comprendre une aile rabattue 9d sur l'aile 8d du support d'arrêt 8.

Le moyen de fixation 9 et le support d'arrêt 8 sont réalisés en tôle métallique venant s'implanter sur l'extrémité 6e du rail de guidage inférieur 6.

On pourrait également prévoir que le moyen de fixation 9 et le support d'arrêt 8 forment une unique pièce.

Un moyen de renfort 11, illustré en pointillés sur la figure 2, est prévu pour renforcer le marche-pied latéral inférieur 5 au niveau du dispositif de fin de course 7 de la portière coulissante (non représentée). Le moyen de renfort 11, réalisé en tôle métallique, est fixé du côté intérieur du marche-pied latéral 5, de sorte que les ailettes de fixation 9b, 9c du moyen de fixation 9 sont fixées au marche-pied latéral 5 et au moyen de renfort 11.

En variante, on pourrait prévoir une fixation du moyen de fixation uniquement au marchepied latéral.

La figure 3 illustre une vue en coupe transversale III-III de la figure 2, passant par la première ailette de fixation 9b du moyen de fixation 9.

Tel qu'illustré sur la figure 3, le marche-pied latéral inférieur 5 comprend une structure extérieure 5a et une structure intérieure 5b jointes à chacune de leurs extrémités de manière à former conjointement une section fermée. La structure intérieure 5b présente un renfoncement local 5c au niveau de la première ailette de fixation 9b et joint à la structure extérieure 5a, de manière à délimiter deux sections fermées 5d, 5e.

Tel qu'illustré sur la figure 3, le moyen de renfort 11 est situé entre la structure extérieure 5a et le renfoncement local 5c de la structure intérieure 5b, de manière à renforcer d'avantage la fixation du moyen de fixation 9 de la butée (non visible sur la figure 3). Le rail 15 de guidage inférieur 6, présentant une section transversale en forme de U s'ouvrant vers l'extérieur du véhicule, est monté par ses deux portions latérales 6b sur la structure extérieure 5a par des moyens de fixation non représentés sur les figures. La figure 3 illustre en détail la section du support d'arrêt 8 et du moyen de fixation 9.

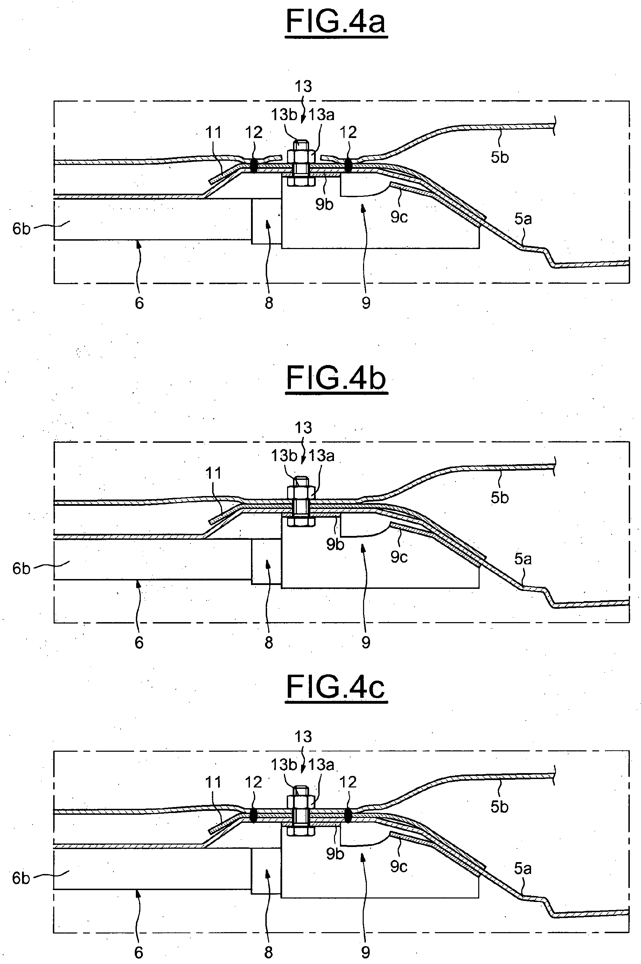

Les figures 4a, 4b et 4c représentent une vue en coupe IV-IV de la figure 3, illustrant trois modes de réalisation de la fixation entre la structure intérieure 5b, le moyen de renfort 11, le moyen de fixation 9 et la structure extérieure 5a.

Dans le premier mode de réalisation de la figure 4a, les structures intérieure 5b et extérieure 5a et le moyen de renfort 11 sont assemblés ensemble par soudage, par exemple, par deux points de soudure 12. Le moyen de fixation 9, notamment la première ailette de fixation 9b, est fixée à la structure extérieure 5b du marche-pied latéral inférieur 5 par des moyens de vissage 13, tel qu'un écrou 13a soudé sur la surface intérieure du moyen de renfort 11 et coopérant avec une vis d'assemblage 13b. Dans cet exemple, le moyen de fixation 9 n'est pas directement fixé à la structure intérieure 5b du marche-pied latéral inférieur 5.

Dans le second mode de réalisation de la figure 4b, les structures intérieure 5b et extérieure 5a, le moyen de renfort 11 et le moyen de fixation 9 sont assemblés ensemble par des moyens de vissage 13, tel qu'un écrou 13a soudé sur la surface intérieure de la structure intérieure 5b coopérant avec une vis d'assemblage 13b. Ainsi la première ailette de fixation 9b est directement fixée à la structure intérieure 5b du marche-pied latéral inférieur 5.

Le troisième mode de réalisation de la figure 4c reprend la fixation par soudure de la figure 4a et la fixation par vissage de la figure 4b. Les structures intérieure 5b et extérieure 5a, le moyen de renfort 11 et le moyen de fixation 9 sont assemblés ensemble par des moyens de vissage 13, par exemple par un écrou 13a soudé sur la surface intérieure de la structure intérieure 5b, tel qu'illustré sur la figure 4b, ainsi que par des moyens de soudage 12, semblables à ceux de la figure 4a, afin de renforcer l'assemblage du marche-pied latéral inférieur 5.

Grâce à l'invention qui vient d'être décrite, le risque de déformation de la structure extérieure du marche-pied latéral inférieur et de la zone de fixation du moyen de fixation sur la structure extérieure est réduit.

De plus, le renfoncement de la structure intérieure peut être mis en oeuvre sur une structure intérieure déjà existante sans modifier la structure extérieure, réduisant ainsi les coûts de fabrication du véhicule automobile.

## Revendications

1. Véhicule automobile (1) comprenant au moins une ouverture de portière (2) apte à coopérer avec une portière coulissante dans au moins un rail de guidage inférieur (6) le long d'une direction longitudinale du véhicule (1) et un marchepied latéral inférieur (5) relié longitudinalement par deux piliers de porte (3), de manière à délimiter l'ouverture de portière (2), ledit marche-pied latéral (5) comprenant une structure intérieure (5b) de marche-pied et une structure extérieure (5a) de marche-pied formant conjointement au moins une section fermée, la structure intérieure (5b) comprenant un renfoncement local (5c) joint à la structure extérieure (5a) et formant deux sections fermées (5d, 5e) et la structure extérieure (5a) comprend, à une des ses extrémités, un dispositif de fin de course (7) de la portière coulissante, ledit renfoncement local (5c) étant disposé au niveau du dispositif de fin de course (7), **caractérisé en ce qu'**il comprend un moyen de renfort (11) prévu pour renforcer le marche-pied latéral inférieur (5) au niveau du dispositif de fin de course (7), ledit moyen de renfort (11) étant disposé entre le renfoncement local (5c) de la structure intérieure (5b) et la structure extérieure (5a).

2. Véhicule automobile selon la revendication 1, dans lequel le rail de guidage inférieur (6), présentant une section transversale en forme de U s'ouvrant vers l'extérieur du véhicule et s'étendant le long d'une direction longitudinale du véhicule (1), est monté sur la structure extérieure (5a).

3. Véhicule automobile selon la revendication 1 ou 2, dans laquelle le renfoncement local (5c) est joint au moyen de renfort (11).

4. Véhicule automobile selon l'une quelconque des revendications 1 à 3, dans lequel le dispositif de fin de course (7) comprend un support d'arrêt (8), un moyen de fixation (9) et un moyen d'arrêt (10).

5. Véhicule automobile selon la revendication 4, dans lequel le moyen de fixation (9) comprend deux ailettes de fixation (9b, 9c) à la structure extérieure (5a).

6. Véhicule automobile selon l'une des revendications 4 ou 5, dans lequel les structures intérieure et extérieure (5a, 5b), le moyen de renfort (11) et le moyen de fixation (9) sont assemblés ensemble par des moyens de soudage et/ou vissage (12, 13).

7. Véhicule automobile selon la revendication 6, dans lequel les moyens de vissage (13) comprennent un écrou (13a) soudé sur la surface intérieure du moyen de renfort (11) ou sur la surface intérieure de la structure intérieure (5b).

## Patentansprüche

1. Kraftfahrzeug (1), umfassend mindestens eine Türöffnung (2), die geeignet ist, mit einer Schiebetür in mindestens einer unteren Führungsschiene (6) entlang einer Längsrichtung des Fahrzeugs (1) zusammenzuwirken, und eine untere seitliche Trittstufe (5), die in Längsrichtung durch zwei Türpfosten (3) verbunden ist, um die Türöffnung (2) zu begrenzen, wobei die seitliche Trittstufe (5) eine innere Trittstufenstruktur (5b) und eine äußere Trittstufenstruktur (5a) umfasst, die gemeinsam mindestens einen geschlossenen Querschnitt bilden, wobei die innere Struktur (5b) eine lokale Verstärkung (5c) aufweist, die mit der äußeren Struktur (5a) verbunden ist und zwei geschlossene Querschnitte (5d, 5e) bildet, und die äußere Struktur (5a) an einem ihrer Enden eine Anschlagvorrichtung (7) für die Schiebetür umfasst, wobei die lokale Verstärkung (5c) im Bereich der Anschlagvorrichtung (7) angeordnet ist, **dadurch gekennzeichnet, dass** es ein Verstärkungsmittel (11) umfasst, das dazu vorgesehen ist, die untere seitliche Trittstufe (5) im Bereich der Anschlagvorrichtung (7) zu verstärken, wobei das Verstärkungsmittel (11) zwischen der lokalen Verstärkung (5c) der inneren Struktur (5b) und der äußeren Struktur (5a) angeordnet ist.

2. Kraftfahrzeug nach Anspruch 1, bei dem die untere Führungsschiene (6), die einen U-förmigen Querschnitt aufweist, der sich zum Äußeren des Fahrzeugs öffnet und entlang einer Längsrichtung des Fahrzeugs (1) erstreckt, auf der äußeren Struktur (5a) montiert ist.

3. Kraftfahrzeug nach Anspruch 1 oder 2, bei dem die lokale Verstärkung (5c) mit dem Verstärkungsmittel (11) verbunden ist.

4. Kraftfahrzeug nach einem der Ansprüche 1 bis 3, bei dem die Anschlagvorrichtung (7) eine Haltestütze (8), ein Befestigungsmittel (9) und ein Haltemittel (10) umfasst.

5. Kraftfahrzeug nach Anspruch 4, bei dem das Befestigungsmittel (9) zwei Flügel (9b, 9c) zur Befestigung an der äußeren Struktur (5a) umfasst.

6. Kraftfahrzeug nach einem der Ansprüche 4 oder 5, bei dem die innere und äußere Struktur (5a, 5b), das Verstärkungsmittel (11) und das Befestigungsmittel (9) durch Schweiß- und/oder Schraubmittel (12, 13) zusammengefügt sind.

7. Kraftfahrzeug nach Anspruch 6, bei dem die Schraubmittel (13) eine Mutter (13a) umfassen, die auf die Innenfläche des Verstärkungsmittels (11) oder auf die Innenfläche der inneren Struktur (5b) geschweißt ist.

## Claims

1. Motor vehicle (1) comprising at least one door opening (2) able to collaborate with a sliding door that slides in at least one lower guide rail (6) in a longitudinal direction of the vehicle (1) and a lower side sill (5) connected longitudinally by two door pillars (3) so as to delimit the door opening (2), said side sill (5) comprising a sill inner structure (5b) and a sill outer structure (5a) that together form at least one closed section, the inner structure (5b) comprising a local indentation (5c) joined to the outer structure (5a) and forming two closed sections (5d, 5e) and the outer structure (5a) comprising, at one of its ends, an end-of-travel device (7) for the sliding door, said local indentation (5c) being positioned in the region of the end-of-travel device **characterized in that** it comprises a reinforcing means (11) provided for reinforcing the lower side sill (5) in the region of the end-of-travel device (7), said reinforcing means (11) being positioned between the local indentation (5c) of the inner structure (5b) and the outer structure (5a).

2. Motor vehicle according to Claim 1, in which the lower guide rail (6), which has a U-shaped cross section open toward the outside of the vehicle and extending in a longitudinal direction of the vehicle (1), is mounted on the outer structure (5a).

3. Motor vehicle according to either of Claims 1 and 2, in which the local indentation (5c) is joined to the reinforcing means (11).

4. Motor vehicle according to any one of Claims 1 to 3, in which the end-of-travel device (7) comprises a stop support (8), a fixing means (9) and a stop means (10).

5. Motor vehicle according to Claim 4, in which the fixing means (9) comprises two fixing flanges (9b, 9c) for fixing to the outer structure (5a).

6. Motor vehicle according to either of Claims 4 and 5, in which the inner and outer structures (5a, 5b), the reinforcing means (11) and the fixing means (9) are assembled together by welding and/or screw-fastening means (12, 13).

7. Motor vehicle according to Claim 6, in which the screw-fastening means (13) comprise a nut (13a) welded to the inner surface of the reinforcing means (11) or to the inner surface of the inner structure (5b).
